# EUROPÄISCHE PATENTSCHRIFT

(11) **EP 1 586 863 B1**
(45) Veröffentlichungstag und Bekanntmachung des Hinweises auf die Patenterteilung: **29.10.2014**
(21) Anmeldenummer: 05008051.4
(22) Anmeldetag: 13.04.2005
(51) Int. Cl.: G01D 3/08

(54) **Mechanisch-elektronischer Positionsgeber**
Electro-mechanical position encoder
Encodeur électromécanique

(30) Priorität: 14.04.2004 DE 102004017950
(43) Veröffentlichungstag der Anmeldung: 19.10.2005
(73) Patentinhaber: Eaton Electrical IP GmbH & Co. KG, 12529 Schönefeld (DE)
(72) Erfinder: Wolff, Bernd, 53773 Hennef (DE); Völlmar, Guido, 51063 Köln (DE)
(74) Vertreter: Eaton IP Group EMEA

(56) Entgegenhaltungen:
- EP-A2- 1 081 015
- DE-A1- 4 330 940
- DE-U1- 20 203 214
- US-A- 5 426 776
- US-A1- 2003 079 163

## Beschreibung

Die Erfindung betrifft einen mechanisch-elektronischen Positionsgeber nach dem Oberbegriff von Anspruch 1.

Aus der Druckschrift DE 199 62 241 A1 ist ein mechanisch-elektronischer Positionsgeber bekannt, der aus einem Winkelgeber in Form eines Zahngetriebes, von diesem angetriebene Magnetimpulsgeber, einem Analog-Digitalwandler (im Folgenden AD-wandler genannt), einem Mikroprozessor und einer Ausgangsstufe mit wahlweise digitaler oder analoger Ausganggröße besteht.

Ein mechanisch-elektronischer Positionsschalter ist aus der Gebrauchsmusterschrift DE 202 03 214 U1 bekannt. In einem Gehäuse sind ein Betätigungsstößel, ein Potentiometer, ein Mikrocontroller und elektronische Schaltkontakte angeordnet. Der Betätigungsstößel ist mit dem Schleifer des Potentiometers gekoppelt. Bei Stößelbetätigung wird dem Mikrocontroller ein sich änderndes elektrisches Signal Zugeführt, das beim Über- bzw. Unterschreiten eines programmierten Schwellenwertes eine Zustandsänderung der Schaltkontakte bewirkt. Die Schaltkontakte sind ausgangsseitig mit den Anschlussklemmen verbunden. Es werden keine Angaben darüber gemacht, wie Ausfälle der Elektronik erkannt werden können um zu verhindern, dass fehlerhafte Ausgangssignale zu Fehlsteuerungen an der Peripherie des Positionsschalters führen.

Aus der US 5 426 776 A ist eine Watchdog-Überwachungsschaltung bekannt, die dazu dient, einen Mikroprozessor auf die Abarbeitung seines Programms zu überwachen. Die Überwachungsschaltung beinhaltet einen Spannungskomparator der eingangsseitig mit einem aus einer ersten Widerstands-Kondensator-Reihenkombination bestehenden Ladungsspeicher verbunden ist und ausgangsseitig an einen Reset-Eingang des Mikroprozessors geführt ist. Eine aus einer zweiten Widerstands-Kondensator-Reihenkombination und einem zu einem Versorgungspotenzial führenden ersten Halbleiterventil bestehende Ladungspumpe ist mit einem zweiten Halbleiterventil mit dem Ladungsspeicher verbunden. Bei regelmäßiger Arbeitsweise liefert ein Watchdog-Ausgang des Mikroprozessors ein dynamisch wechselndes Watchdog-Signal an die Ladungspumpe, die durch regelmäßige Entladung die Ladespannung des Ladungsspeichers unterhalb eines Schwellwertes hält. Mit Aussetzen des Mikroprozessors endet der dynamische Wechsel des Watchdog-Signals und damit das Entladen des Ladungsspeichers über die Ladungspumpe, worauf durch die den Schwellwert übersteigende Ladespannung ein Reset-Signal vom Komparator ausgegeben wird.

Aus DE 43 30 940 A1 ist ein Verfahren zur Überwachung eines Mikrocontrollers bekannt, der bei störungsfreiem Betrieb programmgemäß ein Programmkontrollsignal (Watchdog-Signal) abgibt, das einer Überwachungseinheit zugeführt wird, die bei gestörtem Programmkontrollsignal ein auf den Mikrocontroller einwirkendes Reset-Signal abgibt. Um die Funktionsfähigkeit der Überwachungseinheit prüfen zu können, ist eine weitere Überwachungseinheit vorgesehen. Die Überwachungseinheiten werden gegensinnig alternierend mit dem Programmkontrollsignal und einem Störungstestsignal beaufschlagt und werden damit alternierend zur Schaltungsüberwachung und zur Selbstprüfung herangezogen, indem die Zustände der Überwachungsstufen in Verbindung mit den Programmkontrollsignalen bzw. Störungstestsignalen von kombinatorischen und sequentiellen Schaltglieder ausgewertet und die Auswerteergebnisse dem Mikrocontroller zugeführt werden.

Aus der US 2003/0079163 A1 ist ein gattungsgemäßes elektronisches Gerät mit Eingangssensoren und anschließender Eingangsinterface-Schaltung bekannt, die einen Mikrocontroller, eine Ausgangslaststufe und Gleichstromversorgungsmittel zur Bereitstellung von wenigstens einer Versorgungsspannung enthält, wobei durch den Mikrocontroller dem jeweiligen Zustand der Eingangssensoren entsprechende Werte als Digitalwerte erfasst werden, Datenausgänge des Mikrocontrollers für die jeweiligen Digitalwerte über eine Ausgangsinterface-Schaltung mit der Ausgangslaststufe zur Ausgabe von den Zuständen der Eingangssensoren entsprechenden elektrischen Signalen verbunden ist. Der Mikrocontroller verfügt über einen ersten und zweiten Watchdog-Signalausgang zur Ausgabe eines dynamisch wechselnden, periodisch mit ersten bzw. zweiten Aussetzintervallen beaufschlagten ersten bzw. zweiten Watchdog-Signals wobei die zweiten Aussetzintervalle gegenüber den ersten Aussetzintervallen zeitlich versetzt sind. Mit dem ersten und dem zweiten Watchdog-Signalausgang ist jeweils eine erste bzw. zweite Überwachungsstufe verbunden, die mit einem von einer Ladungspumpe regelmäßig entladbaren Ladungsspeicher ausgestattet ist, wobei die Überwachungsstufen ausgangsseitig ein erstes bzw. zweites Rücklesesignal an den Mikrocontroller liefern.

Bei dieser bekannten Lösung liefern die Rücklesesignale über eine logische Verbindungsschaltung ein Resetsignal an den Mikrocontroller, in deren Folge mittels eines Steuerrelais die Versorgungsspannung bei regelmäßigen ersten und zweiten Watchdog-Signalen durch ein entsprechendes Signal an einem Steuerausgang des Mikrocontrollers zur Ausgangslaststufe durchgeleitet, dagegen bei unregelmäßigen ersten und zweiten Watchdog-Signalen über eine Rücksetz-Speicherschaltung durch das Reset-Signal gesperrt wird. Die erste bzw. zweite Überwachungsstufe und eine von einem ersten bzw. zweiten Fehlererkennungsausgang des Mikrocontrollers beaufschlagte erste bzw. zweite Fehlerantwortschaltung sind ausgangsseitig zusammengeführt, sodass bei ausbleibender Reaktion der ersten oder zweiten Überwachungsstufe während eines ersten bzw. zweiten Aussetzintervalls diese ausgangsseitig zwangsweise durch die Fehlerantwortschaltung mindestens bis zum Eintreten des jeweils anderen Aussetzintervalls beaufschlagt wird, wodurch über das sich ändernde Signal am Steuerausgang mittels des Steuerrelais die Versorgungsspannung zur Ausgangslaststufe unterbrochen wird.

Für einen Positionsgeber ist die vorstehende Lösung sehr aufwendig und benötigt neben dem Funktionstest für die Überwachungsstufen noch zusätzliche Programmschritte und außerdem zusätzliche Funktionstests für weitere Baugruppen.

Der Erfindung liegt daher als Aufgabe die Vereinfachung eines sich selbst überwachenden mechanisch-elektronischen Positionsgebers zugrunde.

Ausgehend von einem mechanisch-elektronischen Positionsgeber der eingangs genannten Art wird die Aufgabe erfindungsgemäß durch die Merkmale des unabhängigen Anspruches gelöst, während den abhängigen Ansprüchen vorteilhafte Weiterbildungen der Erfindung zu entnehmen sind.

Die Überwachungsstufen dienen in Verbindung mit den Watchdog-Signalen grundsätzlich dazu, den Mikrocontroller auf ein Aussetzen zu überwachen und im Falle des Aussetzens durch Sperren der Versorgungsspannung die weitere Ausgabe eines von der Stößelposition entsprechenden Ausgangssignals zu unterbinden. Durch das Zusammenwirken der Überwachungsstufen mit regelmäßig aussetzenden Watchdog-Signalen werden die Überwachungsstufen ihrerseits regelmäßig daraufhin getestet, ob sie noch in der Lage sind, funktionsgerecht auf ein Aussetzen der Watchdog-Signale zu reagieren. Durch ausgangsseitige Rückführung der Überwachungsstufen an Rückleseeingänge wird bei fehlschlagendem Test mit bleibender Aussetzung der Watchdog-Signale die weitere Ausgabe eines der Stößelposition entsprechenden Ausgangssignals unterbunden. Die parallele Überwachung von Watchdog-Signalen mit gegenseitig versetzten Aussetzintervallen über die zwei gleichartigen Überwachungsstufen sorgen in Verbindung mit zwei einseitig verbundenen Dioden bei störungsfreiem Betrieb des Mikrocontrollers für eine kontinuierliche Strom- bzw. Spannungsversorgung der Ausgangsstufe und damit für ein unterbrechungsfreies Ausgangssignal.

Eine vorteilhafte Weiterbildung durch eine zwischen den Dioden und der Ausgangsstufe angeordnete Spannungsversorgungsstufe liefert eine von Schwankungen der von außen gelieferten Versorgungsspannung weitgehend unabhängige Spannungsversorgung der Ausgangsstufe. Eine strombegrenzende Spannungsversorgungsstufe ist hierbei zum Schutz vor ausgangsseitigen Überlastungen der Ausgangsstufe von Vorteil. Eine weitergehende vorteilhafte Ausgestaltung besteht darin, dass die ausgangsseitige Rückführung einer der Überwachungsschaltungen konjunktiv verknüpft mit einer Funktionsabfrage der Spannungsversorgungsstufe erfolgt, sodass auch bei unzureichender Spannungsversorgung der Ausgangsstufe, beispielsweise infolge einer Überlastung oder eines Kurzschlusses am Ausgang der Ausgangsstufe, die weitere Ausgabe eines von der Stößelposition entsprechenden Ausgangssignals unterbunden wird.

Eine vorteilhafte Weiterbildung besteht darin, dass von einer der Überwachungsschaltungen ausgangsseitig ein binäres Kontrollsignal abgegriffen wird, das nach außen die Gültigkeit bzw. Nichtgültigkeit des analogen Ausgangssignals signalisiert.

In vorteilhafter Weiterbildung zur Anzeige fehlerhafter Betriebszustände ist ein Meldeausgang des Mikrocontrollers mit einem optischen Signalelement verbunden.

Zweckmäßigerweise werden die Aussetzungsintervalle im Abstand von einigen Sekunden wiederholt.

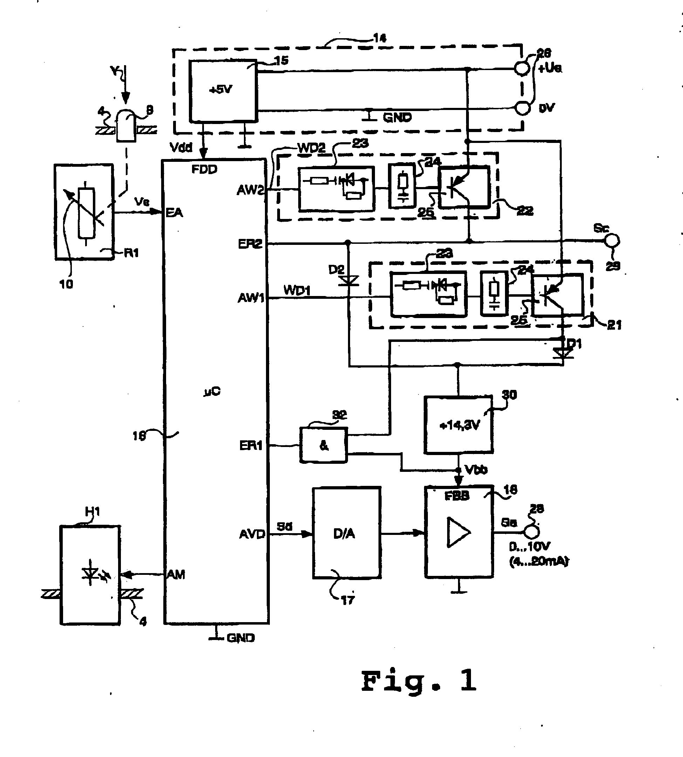

Weitere Einzelheiten und Vorteile der Erfindung ergeben sich aus dem folgenden, anhand einer Zeichnung erläuterten Ausführungsbeispiel. Dabei zeigt die einzige
- Figur 1:: die Blockdarstellung eines erfindungsgemäßen mechanisch-elektronischen Positionsgebers.

Der mechanisch-elektronische Positionsgeber 2 ist in einem kastenförmigen Gehäuse 4, das allerdings nur rudimentär angedeutet ist, aufgebaut. Als mechanische Komponenten sind in dem Gehäuse 4 ein mit oder entgegen der Federkraft einer nicht dargestellten Druckfeder in Betätigungsrichtung Y verschiebbarer Betätigungsstößel 8 sowie ein mit diesem gekoppelter Schleifer 10 eines Potentiometers R1 gelagert. Im Gehäuse 4 sind weiterhin übliche Stromversorgungsmittel 14, ein Mikrocontroller 16, ein DA-Wandler 17, eine Ausgangsstufe 18, eine erste und eine zweite Überwachungsstufe 21 bzw. 22, eine Spannungsversorgungsstufe 30 sowie ein optisches Signalelement H1 angeordnet. Die elektronischen Komponenten sind auf einer Leiterplatte oder auf zwei miteinander verbundenen Leiterplatten befestigt. Über ein Paar erster Anschlussklemmen 26 wird eine Versorgungsspannung Ue zugeführt, die einerseits direkt verwendet und anderseits mittels eines Spannungsreglers 15 in ein erstes Versorgungspotenzial Vdd von +5 V für einen Stromversorgungsanschluss FDD des Mikrocontroller 16 überführt wird. Die Versorgungsspannung Ue und das erste Versorgungspotenzial Vdd sind auf das Bezugspotenzial GND (Massepotenzial) bezogen. Die Ausgangsstufe 18 wird über die Überwachungsstufen 21, 22 mit der Versorgungsspannung Ue gespeist. Um die Einsatzmöglichkeiten des Positionsgebers 2 zu erhöhen, können dem Betätigungsstößel 8 austauschbare Antriebsköpfe vorgesetzt werden.

Die Position des Betätigungsstößels 8 wird auf den Schleifer 10 des Potentiometers R1 übertragen. Am Schleifer 10 steht je nach Position des Betätigungsstößels 8 ein unterschiedlich hohes Schleiferpotenzial Vs an. Das auf das Bezugspotenzial GND bezogene Schleiferpotenzial Vs wird an einen Analogeingang EA des Mikrocontrollers 16 geführt, von diesem in einen entsprechenden digitalen Wert gewandelt und über einen Datenausgang ADV als Digitalgröße Sd an den DA-Wandler 17 übergeben. Der DA-Wandler 17 übergibt den gebildeten Analogwert an die Ausgangsstufe 18, deren Ausgang einen entsprechenden Analogwert eines Ausgangssignals Sa über eine zweite Anschlussklemme 28 zur externen Verwendung zur Verfügung stellt. Die Ausgangsstufe 18 ist beispielsweise als steuerbare Spannungsquelle mit einem Bereich des Ausgangssignals Sa von 0 V bis 10 V oder als steuerbare Stromquelle mit einem Bereich des Ausgangssignals von 4 mA bis 20 mA ausgeführt. Der Gesamtbereich des Analogsignals Sa entspricht dem nutzbaren Betätigungsweg des Betätigungsstößels 8. Der Mikrocontroller 16 gibt über einen Meldeausgang AM bei bestimmten Betriebszuständen unterschiedliche Signale an das Signalelement H1 ab, um Fehler und bestimmte Zustände durch Leuchten oder Blinken zu signalisieren.

Der Mikrocontroller 16 gibt bei ordnungsgemäßem Betrieb über einen ersten Watchdog-Signalausgang AW1 ein erstes Watchdog-Signal WD1 und über einen zweiten Watchdog-Signalausgang AW2 ein zweites Watchdog-Signal WD2 aus. Die Watchdog-Signale WD1, WD2 wechseln dynamisch zwischen einem Low- und einem High-Pegel mit einer Frequenz von etwa 5 kHz. Die ersten Watchdog-Signale WD1 werden der ersten Überwachungsstufe 21 und die zweiten Watchdog-Signale WD2 der zweiten Überwachungsstufe 22 zugeführt. Die erste Überwachungsstufe 21 und die zweite Überwachungsstufe 22 enthalten jeweils eingangsseitig eine Ladungspumpe 23, ausgangsseitig einen Transistorschalter 25 und dazwischen angeordnet einen Ladungsspeicher 24. Ladungspumpen und Ladungsspeicher sind hier nur funktionell angedeutet und an sich aus der eingangs genannten US 5 426 776 A bekannt. Die Ladungspumpen 23 können in fachgemäßer Weise auch mit Transistoren anstelle der angedeuteten Halbleiterventile ausgestattet sein. Die Schaltstrecken der Transistorschalter 25 sind auf der einen Seite mit der Versorgungsspannung Ue und auf der anderen Seite im Falle der ersten Überwachungsstufe 21 mit einer ersten Diode D1 und im Falle der zweiten Überwachungsstufe 22 mit einer zweiten Diode D2 verbunden. Die verbundenen Kathoden der Dioden D1, D2 sind mit dem Eingang der Spannungsversorgungsstufe 30 verbunden, um über dessen Ausgang eine zweite Versorgungsspannung Vbb in Höhe von beispielsweise +14,3 V gegenüber Bezugspotenzial GND an einen Stromversorgungsanschluss FBB der Ausgangsstufe 18 zu liefern. Ausgangsseitig sind die erste Überwachungsstufe 21 und die Spannungsversorgungsstufe 30 mit den Eingängen eines UND-Gliedes 32 verbunden, das ausgangsseitig mit einem ersten Rückleseeingang ER1 des Mikrocontrollers 16 verbunden ist. Die zweite Überwachungsstufe 22 ist ausgangsseitig unmittelbar mit einem zweiten Rückleseeingang ER2 des Mikrocontrollers 16 und zusätzlich mit einer dritten Anschlussklemme 29 zur Ausgabe eines binären Kontrollsignals Sc verbunden.

Bei ordnungsgemäßer Arbeitsweise gibt der Mikrocontroller 16 an seinen Watchdog-Signalausgängen AW1 und AW2 Watchdog-Signale WD1 und WD2 aus. Durch die Ladungspumpen 23 wird im Rhythmus der dynamisch wechselnden Watchdog-Signale WD1 und WD2 ständig Ladung von den Ladungsspeichern 24 abgepumpt. Dadurch bleibt die Ladespannung der Ladungsspeicher 24 unterhalb eines Schwellenwertes, bei dem die Transistorschalter 25 noch leitend sind und damit über beide Überwachungsstufen 21, 22 und die zugehörigen Dioden D1, D2 die Versorgungsspannung Ue zur Spannungsversorgungsstufe 30 durchleiten. Durch das bereitgestellte zweite Versorgungsputenzial Vbb ist die Ausgangsstufe 18 im aktiven Zustand. Unter weiter unten aufgeführten Bedingungen stellt die zweiten Anschlussklemme 28 damit ein gültiges, dem aktuellen Schleiferpotenzial Vs entsprechendes Ausgangssignal Sa zur Verfügung.

Bei Aussetzen des Mikrocontrollers 16 oder bei einem Absturz des im Mikrocontroller 16 gespeicherten Programms endet die Ausgabe der Watchdog-Signale WD1 und WD2. In der Folge kann durch die Ladungspumpen 23 keine Ladung mehr von den Ladungsspeichern 24 abgepumpt werden, sodass deren Ladespannung den bereits erwähnten Schwellenwert überschreitet. Mit Überschreiten des Schwellenwertes gehen die Transistorschalter 25 in den nichtleitenden Zustand über. Somit trennen beide Überwachungsstufen 21, 22 die Versorgungsspannung Ue von der Spannungsversorgungsstufe 30. Das Kontrollsignal Sc gibt durch den stationären Übergang auf den Low-Pegel in Nähe des Bezugspotenzials GND eine Warnung nach außen. Durch das Fehlen der zweiten Versorgungsspannung Vbb wird daraufhin die Ausgangsstufe 18 deaktiviert. Diese Sicherheitsfunktion ist jedoch nur unter der Voraussetzung gegeben, dass die Überwachungsstufen 21, 22 selbst funktionsfähig sind.

Um die Überwachungsstufen 21 und 22 ihrerseits auf ihre Funktion zu testen, bei ausfallenden Watchdog-Signalen WD1 und WD2 die Ausgangsstufe 18 zu deaktivieren, setzen die Watchdog-Signale WD1 und WD2 mit einem periodischen Abstand von etwa 5 s aus. Die zum ersten Watchdog-Signal WD1 gehörenden ersten Aussetzintervalle Δt1 sind gegenüber den zum zweiten Watchdog-Signal WD2 gehörenden zweiten Aussetzintervallen Δt2 beispielsweise um etwa 0,5 s versetzt.

Mit Beginn eines ersten Aussetzintervalls Δt1 endet das Abpumpen von Ladung aus dem Ladungsspeicher 24 der ersten Überwachungsstufe 21, deren Transistorschalter 25 daraufhin im Laufe einiger Millisekunden in den nichtleitenden Zustand übergeht. Das bisher in Höhe der Versorgungsspannung Ue anstehende Anodenpotenzial der ersten Diode D1 bricht zusammen. Währendem wird jedoch die Versorgungsspannung Ue über den weiterhin leitenden Transistorschalter 25 der zweiten Überwachungsstufe 22 und über die zweite Diode D2 an die Spannungsversorgungsstufe 30 geliefert, sodass keine Unterbrechung des Ausgangssignals Sa erfolgt. An dem mit der Spannungsversorgungsstufe 30 verbundenen Eingang des UND-Gliedes 32 bleibt demnach der High-Pegel in Höhe des zweiten Versorgungspotenzials Vbb erhalten, währenddessen an dem mit der ersten Diode D1 verbundenen Eingang und damit auch am Ausgang des UND-Gliedes 32 vom High- zum Low-Pegel wechselt. Diesen Potenzialwechsel erkennt der Mikrocontroller 16 über seinen ersten Rückleseeingang ER1 als bestandenen Test der ersten Überwachungsstufe 21 und beendet daraufhin nach etwa 100 µs das erste Aussetzintervall Δt1 mit der erneuten Ausgabe des dynamisch wechselnden ersten Watchdog-Signals WD1 über den ersten Watchdog-Signalausgang AW1 an die erste Überwachungsstufe 21, worauf diese die Versorgungsspannung Ue wieder durchleitet.

In gleicher Weise endet mit Beginn eines zweiten Aussetzintervalls Δt2 das Abpumpen von Ladung aus dem Ladungsspeicher 24 der zweiten Überwachungsstufe 22, deren Transistorschalter 25 daraufhin im Laufe einiger Millisekunden in den nichtleitenden Zustand übergeht. Das bisher in Höhe der Versorgungsspannung Ue anstehende Anodenpotenzial der zweiten Diode D2 bricht zusammen. Währendem wird jedoch die Versorgungsspannung Ue über den weiterhin leitenden Transistorschalter 25 der ersten Überwachungsstufe 21 und über die erste Diode D1 an die Spannungsversorgungsstufe 30 geliefert, sodass keine Unterbrechung des Ausgangssignals Sa erfolgt. Der Potenzialwechsel von High nach Low an der zweiten Diode D2 erkennt der Mikrocontroller 16 über seinen zweiten Rückleseeingang ER2 als bestandenen Test der zweiten Überwachungsstufe 22 und beendet daraufhin nach etwa 100 µs das zweite Aussetzintervall Δt2 mit der erneuten Ausgabe des dynamisch wechselnden zweiten Watchdog-Signals WD2 über den zweiten Watchdog-Signalausgang AW2 an die zweite Überwachungsstufe 22, worauf diese die Versorgungsspannung Ue wieder durchleitet.

Sollte die Überwachungsstufe 21 oder 22 infolge eines Versagens - beispielsweise durch den Bruch einer Leitungsverbindung, einen Bauelementeausfall oder eine erhebliche Kapazitätsminderung des Ladungsspeichers 24 - nicht auf das Aussetzintervall Δt1 bzw. Δt2 reagieren, wird keine entsprechende Potenzialänderung am Rückleseeingang ER1 bzw. ER2 erkannt. Das begonnene Aussetzintervall Δt1 bzw. Δt2 wird zum einen nicht beendet und der Mikrocontroller 16 gibt nach einer Wartezeit von beispielsweise 10 ms eine digitale Null für die Digitalgröße Sd aus und fällt in eine Fehlerschleife, die er erst mit Beseitigung der Störung verlassen werden kann. Gleichzeitig sendet der Mikrocontroller 16 über seinen Meldeausgang AM ein Fehlermeldesignal an das Signalelement H1 zum blinkenden Ansteuern einer in Wamfarbe gehaltenen Leuchtdiode. Die Watchdog-Signale WD1, WD2 werden im Fehlerfall nicht mehr als dynamisch wechselnde Signale ausgegeben. Allein schon durch das fehlende Wechselverhalten des zweiten Watchdog-Signals WD2 wechselt das Kontrollsignal Sc von einem hochliegenden Potenzial in Nähe der positiven Versorgungsspannung Ue auf ein tiefliegendes Potenzial in Nähe des Bezugspotenzials GND. Dieser Potenzialwechsel kann z.B. von einer mit der dritten Anschlussklemme 29 verbundenen externen Steuerung als Fehlermeldung ausgewertet werden.

Die Spannungsversorgungsstufe 30 weist strombegrenzende Eigenschaften auf, sodass bei Überlastung der Ausgangsstufe 18 - insbesondere infolge eines Kurzschlusses an der zweiten Anschlussklemme 28 - die zweite Versorgungsspannung Vbb zusammenbricht. Dieser Vorgang wird über das UND-Glied 32 am ersten Rückführeingang ER1 vom Mikrocontroller 16 wahrgenommen, worauf dieser durch Beenden der Watchdog-Signale WD1 und WD2 die Überwachungsstufen 21 und 22 sperrt und damit das Kontrollsignal Sc abschaltet und die Ausgangsstufe 18 deaktiviert.

### Bezugszeichenliste:

- 2: Positionsgeber
- 4: Gehäuse
- 8: Betätigungsstößel
- 10: Schleifer
- 14: Stromversorgungsmittel
- 15: Spannungsregler
- 16: Mikrocontroller
- 17: AD-Wandler
- 18: Ausgangsstufe
- 21; 22: Überwachungsstufen
- 23: Ladungspumpe
- 24: Ladungsspeicher
- 25: Transistorschalter
- 26; 28; 29: Anschlussklemmen
- 30: Spannungsversorgungsstufe
- 32: UND-Glied

- AM: Meldeausgang
- AVD: Datenausgang
- AW1; AW2: Watchdog-Signalausgänge
- D1; D2: Dioden
- EA: Analogeingang
- FBB; FDD: Stromversorgungsanschlüsse
- GND: Bezugspotenzial
- H1: Signalelement
- R1: Potentiometer
- Sa: Ausgangssignal
- Sc: Kontrollsignal
- Sd: Digitalgröße
- Ue: Versorgungsspannung
- Vbb; Vdd: Versorgungspotenziale
- Vs: Schleiferpotenzial
- WD1; WD2: Watchdog-Signale
- Y: Betätigungsrichtung
- Δt1; Δt2: Aussetzintervalle

## Patentansprüche

1. Mechanisch-elektronischer Positionsgeber mit einem Gehäuse (4), einem Betätigungsstößel (8) und einem vom diesem beaufschlagten Potentiometer (R1),
- enthaltend einen Mikrocontroller (16), eine Ausgangsstufe (18) und Gleichstromversorgungsmittel (14) zur Bereitstellung von wenigstens einer Versorgungsspannung (Ue), wobei durch den Mikrocontroller (16) ein der jeweiligen Position des Betätigungsstößels (8) entsprechendes, am Schleifer (10) des Potentiometers (R1) anstehendes Schleiferpotenzial (Vs) als Digitalwert erfasst wird, weiterhin
- ein Datenausgang (AVD) des Mikrocontrollers (16) für den jeweiligen Digitalwert über einen DA-Wandler (17) mit der Ausgangsstufe (18) zur Ausgabe eines im wesentlichen zum Schleiferpotenzial (Vs) proportionalen elektrischen Ausgangssignals (Sa) verbunden ist,
- der Mikrocontroller (16) über einen ersten und über einen zweiten Watchdog-Signalausgang (AW1; AW2) zur Ausgabe eines dynamisch wechselnden, periodisch mit ersten bzw. zweiten Aussetzintervallen (Δt1; Δt2) beaufschlagten ersten bzw. zweiten Watchdog-Signals (WD1; WD2) verfügt, wobei die zweiten Aussetzintervalle (Δt2) gegenüber den ersten Aussetzintervallen (Δt1) zeitlich versetzt sind,
- mit dem ersten und mit dem zweiten Watchdog-Signalausgang (AW1; AW2) jeweils eine erste bzw. zweite Überwachungsstufe (21; 22) verbunden ist, die mit einem von einer Ladungspumpe (23) regelmäßig entladbaren Ladungsspeicher (24) ausgestattet ist, und
- die Überwachungsstufen (21; 22) ausgangsseitig wenigstens mittelbar jeweils an einen ersten bzw. zweiten Rückleseeingang (ER1; ER2) des Mikrocontrollers (16) geführt sind,
**dadurch gekennzeichnet,**
- **dass** die erste bzw. zweite Überwachungsstufe (21; 22) die anliegende Versorgungsspannung (Ue) bei dynamisch wechselnden ersten bzw. zweiten Watchdog-Signalen (WD1; WD2) ausgangsseitig durchleitet, dagegen bei aussetzenden ersten bzw. zweiten Watchdog-Signalen (WD1; WD2) sperrt,
- **dass** die Ausgänge der Überwachungsstufen (21; 22) über jeweils eine erste bzw. zweite Diode (D1; D2) wenigstens mittelbar zur Durchleitung der ersten Versorgungsspannung (Ue) mit einem Stromversorgungsanschluss (FBB) der Ausgangsstufe (18) verbunden sind und
- **dass** bei ausbleibender ausgangsseitiger Sperrung der ersten oder der zweiten Überwachungsstufe (21; 22) während eines der ersten bzw. zweiten Aussetzintervalle (Δt1; Δt2) infolge wenigstens einem der Rücklesesignale (ER1; ER2) die Aussetzung der Watchdog-Signale (WD1, WD2) bestehen bleibt.

2. Positionsgeber nach vorstehendem Anspruch, **dadurch gekennzeichnet, dass** die zweite Überwachungsstufe (22) ausgangsseitig an eine Kontroll-Anschlussklemme (29) geführt ist.

3. Positionsgeber nach einem der vorstehenden Ansprüche, **dadurch gekennzeichnet, dass** zwischen dem Verbindungspunkt der Dioden (21; 22) und dem Stromversorgungsanschluss (FBB) der Ausgangsstufe (18) eine Spannungsversorgungsstufe (30) angeordnet ist.

4. Positionsgebers nach vorstehendem Anspruch, **gekennzeichnet durch** eine strombegrenzende Spannungsversorgungsstufe (30).

5. Positionsgeber nach Anspruch 3 oder 4, **dadurch gekennzeichnet, dass** die erste Überwachungsstufe (21) und die Spannungsversorgungsstufe (30) über ein UND-Glied an den ersten Rückleseeingang (ER1) und die zweite Überwachungsstufe (22) unmittelbar an den zweiten Rückleseeingang (ER2) geführt sind.

6. Positionsgeber nach einem der vorstehenden Ansprüche, **dadurch gekennzeichnet, dass** der Mikrocontroller (16) über einen Meldeausgang (AM) verfügt, der mit einem optischen Signalelement (H1) verbunden ist.

7. Positionsgeber nach einem der vorstehenden Ansprüche, **dadurch gekennzeichnet, dass** die Aussetzintervalle (Δt1;Δt2) einen Wiederholabstand im einstelligen Sekundenbereich aufweisen.

## Claims

1. A mechanical-electronic position encoder with a housing (4), an operating plunger (8) and a potentiometer (R1) impinged on by the same,
- containing a microcontroller (16), an output stage (18) and direct current supply means (14) for providing at least one supply voltage (Ue), wherein a wiper potential (Vs) occurring at the wiper (10) of the potentiometer (R1), representing the current position of the operating plunger (8), is captured as a digital value by means of the microcontroller (16), moreover
- a data output (AVD) of the microcontroller (16) for the respective digital value is connected through a DA converter (17) with the output stage (18) for output of an electrical output signal (Sa) proportional to the wiper potential (Vs),
- the microcontroller (16) has a first and a second watchdog signal output (AW1; AW2) for output of a dynamically changing, periodic, first and second watchdog signal (WD1; WD2), periodically supplied at first and second intermittency intervals (Δt1; Δt2) respectively, the second intermittency interval (Δt2) being offset in time with respect to the first intermittency interval (Δt1),
- a first and a second monitoring stage (21; 22) is associated with the first and with the second watchdog signal output (AW1; AW2), respectively, which is equipped with a charge storage device (24) that can be regularly discharged by a charge pump (23), and
- the monitoring stages (21; 22) are routed on the output side at least indirectly to a first and second read-back input (ER1; ER2) of the microcontroller (16), respectively, **characterized in that**
- the first and second monitoring stage (21; 22), respectively, passes on the output side the supply voltage (Ue) that is present when dynamically changing watchdog signals (WD1; WD2) are present, but on the other hand blocks it when the first and second watchdog signal (WD1; WD2), respectively, is intermittent,
- that the outputs of the monitoring stages (21; 22) are connected at least indirectly through a first and second diode (D1; D2), respectively, with a power supply connection (FBB) of the output stage (18) for the purpose of passing the first supply voltage (Ue) and
- that in the absence of output-side blocking of the first or of the second monitoring stage (21; 22) during one of the first or second intermittency intervals (Δt1; Δt2) due to at least one of the read-back signals (ER1; ER2) the intermittency of the watchdog signals (WD1, WD2) persists.

2. The position encoder according to the foregoing claim, **characterized in that** the second monitoring stage (22) is routed on the output side to a control connector strip (29).

3. The position encoder according to one of the foregoing claims, **characterized in that** a voltage supply stage (30) is positioned between the tie point of the diodes (21; 22) and the power supply connector (FBB) of the output stage (18).

4. The position encoder according to the foregoing claim, **characterized by** a current-limiting voltage supply stage (30).

5. The position encoder according to Claim 3 or 4, **characterized in that** the first monitoring stage (21) and the voltage supply stage (30) are routed through an AND circuit to the first read-back input (ER1) and the second monitoring stage (22) is routed directly to the second read-back input (ER2).

6. The position encoder according to one of the foregoing claims, **characterized in that** the microcontroller (16) has a signal output (AM) which is connected with an optical signal element (H1).

7. The position encoder according to one of the foregoing claims, **characterized in that** the intermittency intervals (Δt1; Δt2) have a repetition interval in the single-digit second range.

## Revendications

1. Codeur de position électromécanique comprenant un boîtier (4), un piston fonctionnel (8) et un potentiomètre (R1) affecté par ce dernier,
- contenant un microcontrôleur (16), un étage de sortie (18) et un moyen d'alimentation en courant continu (14) permettant de fournir au moins une tension d'alimentation (Ue), en sachant qu'un potentiel aux balais (Vs), qui se produit au niveau du balai (10) du potentiomètre (R1) en fonction de la position actuelle du piston fonctionnel (8), est capturé sous la forme d'une valeur numérique au moyen du microcontrôleur (16), et dans lequel en outre
- une sortie de données (AVD) du microcontrôleur (16) pour la valeur numérique respective est raccordée via un convertisseur N/A (17) à l'étage de sortie (18) pour permettre la sortie d'un signal de sortie électrique (Sa) sensiblement proportionnel au potentiel aux balais (Vs),
- le microcontrôleur (16) comporte une première et une seconde sortie de signal de chien de garde (AW1 ; AW2) permettant la sortie d'un premier et d'un second signal de chien de garde changeant de manière dynamique (WD1 ; WD2) et respectivement soumis, de manière périodique, à des premier et second intervalles d'intermittence (Δt1 ; Δt2), le second intervalle d'intermittence (Δt2) étant décalé dans le temps par rapport au premier intervalle d'intermittence (Δt1),
- un premier et un second étage de surveillance (21 ; 22) sont respectivement associés à la première et à la seconde sortie de signal de chien de garde (AW1 ; AW2) et sont pourvus d'un dispositif de stockage de charge (24) qui peut être régulièrement déchargé par une pompe de charge (23), et
- les étages de surveillance (21 ; 22) sont acheminés côté sortie au moins indirectement à une première et à une seconde entrée de relecture (ER1 ; ER2) respectives du microcontrôleur (16), **caractérisé en ce que** :
- le premier et le second étage de surveillance (21 ; 22), respectivement, conduisent côté sortie la tension d'alimentation (Ue) qui est présente lorsque des signaux de chien de garde changeant de manière dynamique (WD1 ; WD2) sont présents mais, en revanche, la bloquent lorsque le premier et le second signal de chien de garde (WD1 ; WD2), respectivement, sont intermittents,
- les sorties des étages de surveillance (21 ; 22) sont raccordées au moins indirectement, par le biais d'une première et d'une seconde diode (D1 ; D2) respectives, à une connexion d'alimentation électrique (FBB) de l'étage de sortie (18) pour ainsi conduire la première tension d'alimentation (Ue), et **en ce que**
- en l'absence d'un blocage, côté sortie, du premier ou du second étage de surveillance (21 ; 22) pendant le premier ou le second intervalle d'intermittence (Δt1 ; Δt2) à la suite d'au moins l'un des signaux de relecture (ER1 ; ER2), l'intermittence des signaux de chien de garde (WD1, WD2) persiste.

2. Codeur de position selon la revendication précédente, **caractérisé en ce que** le second étage de surveillance (22) est acheminé côté sortie à une borne de connexion de contrôle (29).

3. Codeur de position selon l'une quelconque des revendications précédentes, **caractérisé en ce qu'**un étage d'alimentation électrique (30) est positionné entre le point de raccordement des diodes (21 ; 22) et la connexion d'alimentation électrique (FBB) de l'étage de sortie (18).

4. Codeur de position selon la revendication précédente, **caractérisé par** un étage d'alimentation électrique (30) à fonction de limitation de courant.

5. Codeur de position selon la revendication 3 ou 4, **caractérisé en ce que** le premier étage de surveillance (21) et l'étage d'alimentation électrique (30) sont acheminés par le biais d'un circuit ET à la première entrée de relecture (ER1) et le second étage de surveillance (22) est acheminé directement à la seconde entrée de relecture (ER2).

6. Codeur de position selon l'une quelconque des revendications précédentes, **caractérisé en ce que** le microcontrôleur (16) possède une sortie de signalisation (AM) qui est raccordée à un élément de signal optique (H1).

7. Codeur de position selon l'une quelconque des revendications précédentes, **caractérisé en ce que** les intervalles d'intermittence (Δt1 ; Δt2) présentent un intervalle de répétition dans la plage des secondes à un seul chiffre.
